# EUROPEAN PATENT APPLICATION

(11) **EP 0 821 177 A1**
(43) Date of publication of application: **28.01.1998**
(21) Application number: 95931473.3
(22) Date of filing: 01.09.1995
(51) Int. Cl.: F16D 43/14, F16D 17/00

(54) **CENTRIFUGAL CLUTCH**

(30) Priority: 17.03.1995 RU 95103902
(71) Applicant: Khabibullin, Minzadit Navshirvanovich, Elabuga mikroraion, 4, Tartarstan (RU)
(72) Inventor: Khabibullin, Minzadit Navshirvanovich, Elabuga mikroraion, 4, Tartarstan (RU)
(74) Representative: AMMANN PATENTANWAELTE AG BERN
(86) International application number: RU9500191
(87) International publication number: WO9629523

(57) **Abstract**

The centrifugal clutch comprises: a first clutch half (2) with a sealed chamber (3) which can be filled with a working fluid; and a second clutch half (4), he two clutch halves being mounted coaxially. Cams(9) are mounted on the clutch half and can rotate, double arm levers (11) are attached so as to pivot on the first clutch half (2), one of the arms (12) being in contact with the corresponding cam(9).The centrifugal clutch is provided with loads (15) in the form of the other arm of each lever (11), and with a hydraulic damping unit This unit contains deflectors (23) mounted on the periphery of the sealed chamber (3) with a gap (24) in relation to the other arms of each lever (11), and also a planetary gear whose carrier (16) and the satellites (18,19) mounted thereon is rigidly connected to the second clutch half (4).The inner central wheel(20) of the planetary gear is rigidly connected to the cams (9). According to the invention, the sealed chamber (3) is provided with channels (25) formed from the inside on at least one of the two surfaces (26,27) on either side of the levers (11) and mainly on those sections of the surfaces (26,27) which correspond to the region where the loads (15) are arranged and can be displaced. The loads (15) are connected by a flexible link (28) to the deflectors (23) or to peripheral sections of the chamber (3) which are static in relation to the partitions(23). The inner central wheel(20) can rotate on the first clutch half(2).

## Description

### Branch of Technics

The invention refers to a field of engineering, transport means construction, namely to the devices to transfer a rotation movement and it can be used to transfer a torsion moment in machines and mechanisms, in particular, in motor vehicles and tractors.

### Background of the Invention

A centrifugal clutch is known which one contains a first (driving) and a second (driven) clutch halves being coaxially mounted; double-arm levers are attached so as to pivot on the first clutch half, loads are placed on the levers (US,A 4328884). The clutch contains elements of interactions between the levels and a driven clutch half which elements are mounted on the levers arms opposite to the loads.

This clutch is characterized to have a large amount of friction elements, in this connection a problem arose to increase the life period of the device due to partial elimination of them, to facilitate access to the moving elements and to improve the construction.

To solve this problem a centrifugal clutch was offered containing a first (driving) and a second (driven) clutch halves, double- arm levers, loads placed on the levers, elements of interaction with the driven clutch half which ones being mounted on the levers arms opposite to the loads.
The clutch is provided with cams rigidly fixed on the second clutch.
Elements of levers interaction with the second clutch half are made in the form of rollers mounted on the axes.
The rollers contact with the cams, and the levers are sprung to the cams (SU,A 1516645).

High contact tensions in the places of cams contact with the rollers restrict the increase of the clutch long life . Such clutch can be used only as a safety one due to appearing of negative impulses to be created by double-arm levers in the definite phases of the clutch rotation.

The problem to decrease the contact tensions in the areas of details contacts was solved in the centrifugal clutch, containing clutch halves being mounted coaxially, cams being mounted on one of the clutch halves, double- arm levers being mounted on the other clutch half with the possibility to rotate and interact with the cams of one of the arms, and the centrifugal loads fixed on the other arm of the lever. This clutch is provided with a planetary gear whose carrier is rigidly connected to one of the clutch halves. The outer central wheel is mounted on the other clutch half. The inner central wheel is mounted on the cams, and the cams are fixed with the possibility to rotate relatively to the clutch half (SU,A 1682672). This clutch also can be used as a safety one due to appearing of negative impulses to be created by double-arm levers in the definite phases of rotation.

A centrifugal clutch was offered (RU,C1,2006711) containing the first clutch half with a sealed chamber and the second clutch half being mounted coaxially, cams fixed with the possibility to rotate, double-arm levers attached so as to pivot on the first clutch half one of the arms being in contact with the corresponding cam, loads placed on the other arm of each lever and hydraulic damping units with the means of throttling.
Moreover, this clutch is provided with a planetary gear whose carrier and the satellites mounted thereon is rigidly connected with the second clutch half, the outer central wheel is connected with the first clutch half by means of a free-wheeling clutch, cams are mounted on the hub of the inner central wheel, hydraulic damping units are made in the form of partitions of two types to be located in the first clutch half and to divide the sealed chamber into the parts. The partitions of the first type are made with different arms and mounted by means of an axis parallel the clutch axis and the axis of levers rotation with the possibility for the larger arm to contact with the surface of the clutch half restricting the sealed chamber, and for the smaller arm with the lever; the partitions of the second type are located with the throttle gap relatively to the lever.
The amount of the gap is variable under different levers positions. In the zone of each lever one partition of each type is mounted.

Hydraulic damping units with the means of throtling have the limited range of adaptation to different working conditions, in particular, to alterations of the shaft rotation speed. Under high rotations the fluid has no time to enter and to be taken out of the means of throtling with the speed corresponding to the mechanism working.
Moreover, the valves (rotary partitions) to be available in this means make this device more complicated.

The most similar as to a technical essence and achieved results to the offered one is the centrifugal clutch containing the first clutch half with a sealed chamber which can be filled with a working fluid and the second clutch half both being mounted coaxially, cams mounted on the clutch half with the possibility of rotating, double-arm levers attached so as to pivot on the first clutch half and one of the arms being in contact with corresponding cam, loads in the form of the other arm of each lever and a hydraulic damping unit. This clutch is provided with a planetary gear whose carrier and satellites mounted thereon is rigidly connected to the second clutch half, and the inner central wheel is rigidly connected to the cams. The hydraulic damping unit contains the partitions with the gap according to the other arms of each lever and being mounted on the periphery of the sealed chamber (WO 94/24451).

Anyway, as to the experiment this solution does not allow fully to escape the negative force impulses and beats under device working caused by a definite unsuitability of holding the loads by the system units rotation. It is explained with that, when the loads are moving from the center to the periphery on the definite area of their way either loads " overholding" takes place what causes the beats between the loads and cams due to non-coordination of loads working with cams working, or extra pressure on the cams takes place on the other area of loads moving what causes the negative impulses appearance.
Moreover, sufficiently fast impulses do not cause effective reaction in reply due to the system inerty. In particular, it is of great importance when the motor vehicle is starting, as the short impulses even strong will not bring to the result (movement).

The system can be overheated due to the friction of the oil film on the border with the metal surfaces moving relatively to it. At last, the system has a sufficiently large mass and relatively not high durability to carry out a number of problems.

By the work of such clutch, the mechanism braking is difficult at the high speeds of transport move and high engine rotations due to the fly-wheel inertia and absence of capability to disconnect the centrifugal clutch from the transmission system. Due to the latter reason the adjustment of transport start is difficult. As the experiment showed, the motor vehicle starts even at the low engines rotations.

### Disclosure of the Invention

With this invention it was aimed to create such device which would provide an increase in stability of the loads interaction with the cams, an elimination of the system overheating, a decrease of its mass and an increase of its durability, an impulses " diminishing" to increase their period of action.

This problem is solved by that in the centrifugal clutch containing a first clutch half with a sealed chamber which can be filled with a working fluid and a second clutch half, the two clutch halves being mounted coaxially; cams mounted on the clutch half with the possibility to rotate, double-arm levers are attached so as to pivot on the first clutch half, one of the arms being in contact with the corresponding cam, loads made as the other arm of each lever, and a hydraulic damping unit containing deflectors mounted on the periphery of the sealed chamber with a gap in relation to the other arms of each lever, a planetary gear whose carrier and the satellites mounted thereon is rigidly connected to the second clutch half, and the inner central wheel is rigidly connected to the cams, according to the invention the sealed chamber contains channels formed from the inside on at least one of the two surfaces on either side of the levers and mainly on those sections of the surfaces which correspond to the region where the loads are arranged and can be displaced; the loads are connected by a flexible link to the partitions or to peripheral sections of the chamber which are static in relation to the partitions, and the inner central wheel is mounted with the possibility of rotation on the first clutch half.

In a preferable version of the invention execution the deflectors surface being in contact with the working fluid consists of two sections, the first of which is made in a streamlined form, and the second one is located with a sharp bend in relation to the first one and placed towards to the working fluid flow direction.

In such version of invention execution preferable is considered to be that, when the first section of the deflectors surface is made in the form of a lateral surface of the circular cylinder, and the second section in the form of a vertical profile of this cylinder with a plane to be perpendicular to the segment connecting the lateral points of the deflectors surface located at the edge of the sealed region and cut off 1/3-1/5 of this segment from the side of the working fluid flow direction.

In particular, the deflectors can be made with the radius of the curvature of the deflectors cross-section being equal (3-4)E, where E is the cams eccentricity.

On the second clutch half a free-wheeling clutch can be mounted being rigidly connected with its iron ring to the second clutch half.

In one of the versions of execution of the invention the centrifugal clutch contains a unit of gears connected to each other; the unit mounted on the second clutch half can swing and is connected to a reverser and a free-wheeling clutch; the connection with the free-wheeling clutch is made flexible.

In this version of execution of the invention the centrifugal clutch contains an on-off mechanism connected at least to one of the sensors selected from the group including a sensor of a tachometer, a sensor of a speedometer, a sensor of a change-gear lever, as well as to a handdrive.

In another version of execution of the invention the centrifugal clutch can contain a reverser connected with the second clutch half, on the secondary shaft of which the free-wheeling clutch is rigidly mounted through its iron ring; a cardan shaft is connected to the second clutch half through a reverser and is made of at least two sections connected to each other by means of a flexible link.

A flexible connection can, in particular, contain one or several springs mounted so as to be capable to work for twisting. A planetary gear is necessary to be available to control the frequency of loads swinging and to decrease the clutch dimensions.

An inner central ("solar") wheel of the planetary gear, on which the cams are mounted is nesessary to transfer the rotation onto the cams and from the cams to the driven clutch. An outer central wheel is used for the same aim.

The outer central wheel of the planetary gear is mounted with the possibility of rotation on the first clutch half and rigidly connected to the cams.

A hydraulic damping unit containing deflectors mounted on the periphery of the sealed chamber with a gap in relation to the other arms of each lever and together with the said arm eliminates the negative moments arisen when the clutch in operation. When the clutch in operation, the loads start moving from the periphery to the center. The fluid being closer to the center and consequently, having a lower line speed, than the clutch points corresponding to the determined radius of rotation replaces them. Since according to the law of inertia the fluid can not acquire immediately the speed corresponding to a new longer radius of its location, a flow of fluid is formed in the direction reverse to the direction of the centrifugal clutch rotation. The said flow which movement is effected by the Coriolis force meets the deflectors on its way, change its direction and start moving as though from the periphery of the sealed chamber to the loads (double-arm levers), thus, holding the loads movement from the center to the periphery and suppressing the negative impulse onto the outlet shaft. The fluid flow is regulated by the gap size between the lever arm and the deflector (and also by the shape of the deflector) Thus, the gap fulfills the function of the throttling hole of the hydraulic damper.

The deflectors can be of a different shape, for example, of a segment, a trapezium and others, depending on the working fluid characteristics as well as on the form of the double- arm levers and the loads placed on them.

Such deflectors execution is considered to be preferable when their surface being in contact to the working fluid consists of the two sections, the first of which is made of a streamlined form, and the second one is located with the sharp bend in relation to the first one and placed towards to the working fluid flow direction.

The second section to be in available suppresses the inertia of the fluid flow (and consequently, decreases the obstacle to the load movement from the center to the periphery from the side of this fluid flow).

It was shown by the experiment, that the best is such execution of the centrifugal clutch when the first section of the deflectors surface is made as a lateral surface of the circular cylinder, and the second section is made in the form of a vertical section of this cylinder with a plane being perpendicular to a segment connecting the lateral points of the deflectors surfaces, located at the edge of the sealed region and cut off 1/3-1/5 (preferably 1/4) of the said segment from the side of the working fluid flow direction.

Moreover, it was shown by the experiment, that the best is such a version of execution of the invention when the deflectors are made with the radius of curvature of their cross-section being equal (3-4)E, where E is the cams eccentricity.

The double-arm levers in the clutch are located so as the direction from the second arm (on which the loads are placed) to the first one coincides with the rotation direction of the centrifugal clutch being in operation. This facilitates the formation of the above fluid flow in this direction reverse to the clutch rotation direction.

The sealed chamber contains channels formed from the inside on at least one of the two surfaces disposed on opposite sides of the levers and mainly on those sections of the surfaces which coincides with the region where the loads are arranged and can be displaced. Such channels are as if an additional overflowing channel for the fluid facilitating its passing under sufficient pressure overfall on opposite sides of the levers. The channels to be in available exclude the possible delay in a phase of the levers movement from the cams movement, an amplitude of the levers movement are strictly subjected now to the sinusoidal law. In this case, the levers movement fully corresponds to the cams movement and both the negative impulses and beats are fully excluded.

Moreover, these channels allow to decrease the mass by increasing the construction durability (due to the ribs).
The speed of heat output also grows due to increase of the surface of contact of the working fluid (oil, for example) with the metal, what decreases the possible heating. The friction force between the levers and inner surfaces of the sealed chamber is also decreased.

The channels can be made of any shape, for example, ringshaped, and the center of the ring coincides with the axis of the second clutch half. In this case all the channels are made concentric. The channels can be, for example, rectangular or trapezium in cross-section. Since, the additional fluid overflow is required just in the region where the fluid meets the levers as the resistance, the channels are mainly formed on the sections of the surfaces which correspond to the region where the loads are arranged and can be displaced. By the "surfaces" are meant, in particular, the planes being parallel to the planes of possible loads travel when the sealed chamber are made cylindrical (two bases of the cylinder).

The loads are connected by a flexible link (for example, being sprung) to the deflectors or to peripheral sections of the chamber which are static in relation to the partitions what allows to avoid the levers strokes against the cams under low clutch rotations either its move or installation.

A free-wheeling clutch is mounted on the second clutch half, rigidly connected by its iron ring to the second clutch half. The centrifugal clutch can contain a unity of gears connected to each other, which one mounted on the second clutch half can swing and connected to a reverser and a free-wheeling iron ring, the link with the free-wheeling iron ring is made flexible.

In operation the free-wheeling clutch as if accumulates the energy of short impulses increasing the period of these impulses action, what is necessary ,in particular, to start the transport.

The flexible link allows to transmit the impulses energy to the free-wheeling clutch, prevents the running gear of the transport from destroying by impulse action.

The centrifugal clutch also preferably contains on-off mechanism, connected at least to one of the sensors, selected from the group, putting on a tachometer sensor, a brake sensor, a speedometer sensor, a change-gear lever sensor. Moreover, this mechanism is also connected to the hand control driver.

On-off mechanism of the centrifugal clutch allows to exclude such undesirable phenomena as a difficult brake of the motor vehicle at the high speeds of movements, allows to regulate the starting moment, sufficiently to decrease the wear of the free-wheeling clutch itself.

As the above sensors can be used the sensors of standard production, as the on-off mechanism may be used any standard mechanism, for example, magnetic drive or pneumodrive, hydrodrive. The hand control to provide the multyfunctional work is also foreseen.

Another version of the centrifugal clutch is also possible, it includes a reverser connected to the second clutch half, a free-wheeling clutch is rigidly mounted by its iron ring on the secondary shaft of the reverser, and a cardan shaft is connected to the second clutch through the reverser and made of at least two sections connected to each other by the flexible link.

A unit of gears connected to each other is designed to transmit the torsional moment onto the reverser, providing the possibility of the reverse running and neutral position. The free-wheeling clutch mounted on the secondary shaft do not allow the twisted spring of the cardan shaft to be untwisted in the back direction.

The cardan shaft carries out its usual function to transmit the movement. It being made as compound allows to increase the period of impulse action due to the energy accumulation of the flexible link in the connecting section of the shaft (for example, in a twisted spring).

As the flexible link the clutch can contain one or several springs mounted with the possibility to work for twisting, for example, putting on the shaft and thus being fixed coaxially with it.

In the first version such a spring is connected with one end to the unity of gears, and with the other to the iron ring of the free-wheeling clutch.

In the second version the ends of the spring connect the cardan shaft sections mounted coaxially one in another, and the spring is put on these sections coaxially with them.

In all the versions the hub of the free-wheeling clutch is rigidly connected to the support (for the stationary mechanism) or to the body of the transport.

### Short Description of the Drawings

The examples of the invention with references to the enclosed drawings are given bellow for better understanding.

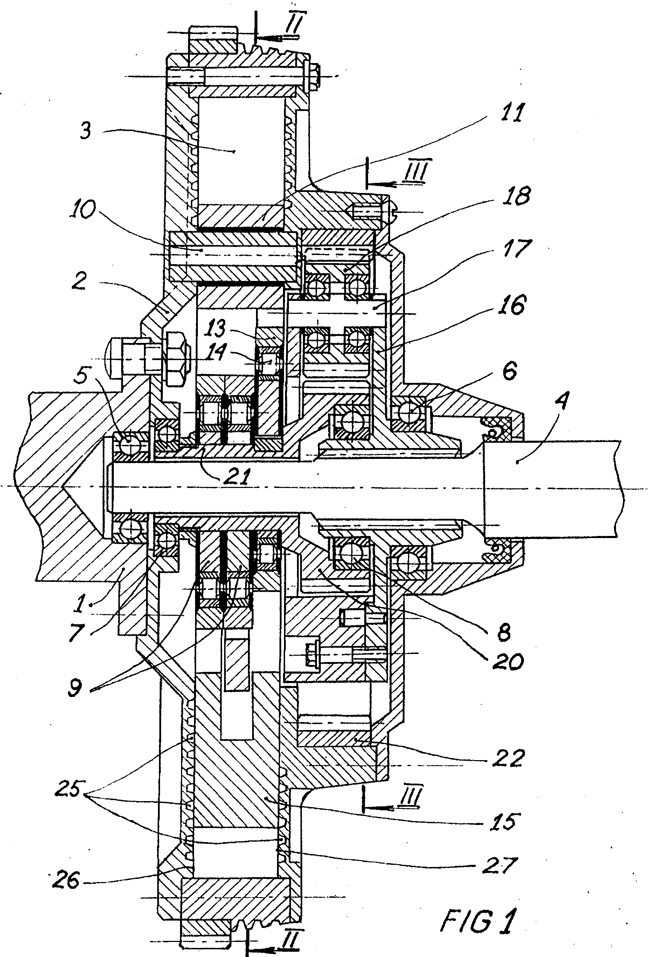

Fig.1 shows the general view of the clutch in profile (I-I in Fig.2)
Fig.2 shows profile of the clutch II-II in Fig.1

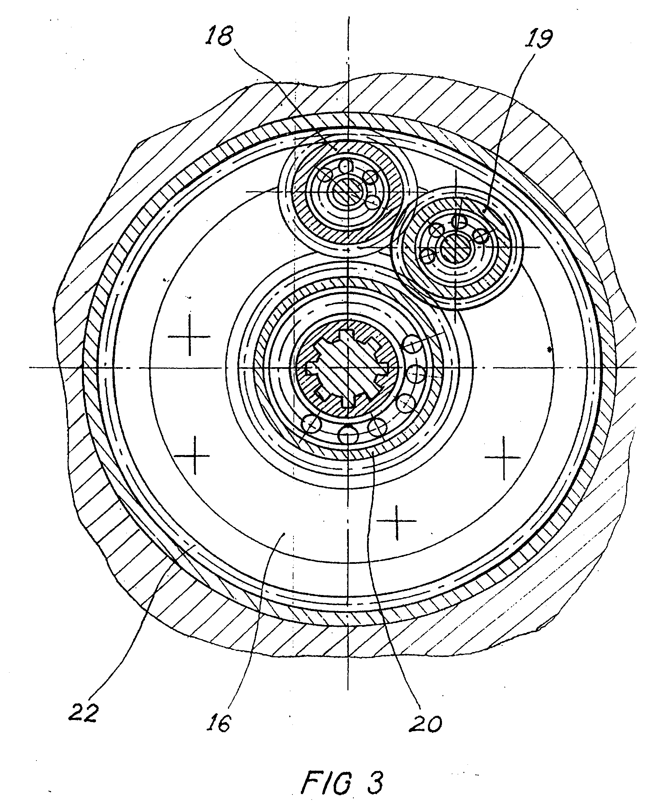

Fig.3 shows profile of the clutch III-III in Fig.1
Fig.4 shows in profile the version of execution of the centrifugal clutch containing a free-wheeling clutch and a reverser
Fig.5 shows in profile the version of execution of the centrifugal clutch containing a free-wheeling clutch, a reverser and a cardan shaft.

### Detailed Description of the Invention

The centrifugal clutch comprises a first (driving) clutch half 2 with a sealed chamber 3 and a second (driven) clutch half 4 made in the form of the outlet shaft, the two clutch halves being mounted coaxially on the shaft 1. The second clutch half 4 is mounted on the shaft 1 by means of bearings 5 and 6. Cams 9 are mounted on the first clutch half 2 and can rotate (by means of bearings 7 and 8). Double-arm levers 11 are attached by means of fingers 10 so as to pivot on the first clutch half 2. One of the arms 12 of each lever 11 is mounted being in contact with the corresponding cam 9 (each lever 11 has its corresponding cam 9). The cams 9 are being in contacts with arms 12 of the levers 11 by means of iron rings 13 mounted on the cams 9 by means of rollers 14.

The loads 1 are made as the other arm of each lever (the loads integrate with the lever 11 in the described example).

The centrifugal clutch is provided with a planetary gear.
On the carrier 16 of the planetary gear three pairs of satellites 18 and 19 are mounted on the axes 17. The carrier 16 is rigidly connected (put on) to the second clutch half 4. The inner central (solar) wheel 20 of the planetary gear is rigidly connected to the cams 9 by means of hub 21.

The inner central wheel 20 is connected to the outer central toothed (epicycle) wheel 22 by means of three pairs of satellites 18 and 19. The deflectors 23 are mounted on the periphery of the sealed chamber 3 with a gap 24 in relation to the other arms 15 of each lever 11.

The sealed chamber 3 contains channels 25 formed from the inside on the two surfaces 26 and 27 on either side of the levers 11 .The loads 15 are connected by flexible links (springs) 28 with the deflectors 23.

The surface of the deflectors 23 being in contacts with the working fluid consists of the two sections, the first of which 29 is made in a streamline shape in the form of the lateral surface of the circular cylinder, and the second 30 is located with a sharp bend 31 in relation to the first one and placed towards to the direction of the working fluid flow (shown with an arrow). The other section 30 of the deflectors 23 surface is made in the form of vertical section of the cylinder with a plane being perpendicular to the segment 32 connecting lateral points 33 and 34 of the deflector surface located at the edge of the sealed chamber 3. The segment L on its length makes up 1/4 of the segment 32 length. Radius of curvature R of the cross-section of the deflectors 23 makes up (3-4) E, where E is the cams 9 eccentricity.

A unit 35 of the gears connected to the reverser 36 and the iron ring 37 of the free-wheeling clutch is mounted on the second clutch half 4 and can swing by means of he spring 38.

The iron ring 37 is rigidly put on the second clutch half 4. The hub 39 of the free-wheeling clutch is rigidly connected to the flange 40 of the transport means.

The on-off mechanism of the free-wheeling clutch contains a disk 41, fingers 42 and a drive 43.

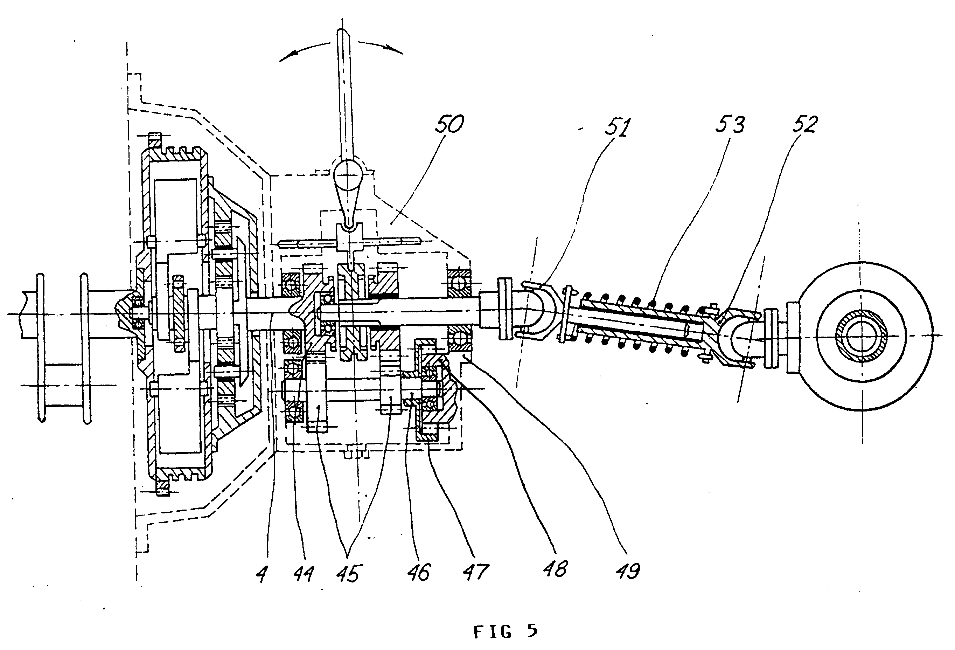

In the other version of the centrifugal clutch execution (Fig.5) it contains a gear 44 mounted on the second clutch half 4 and connected to the unit of reverser containing gears 45 and a secondary shaft 46.

The free-wheeling clutch is rigidly mounted by its iron ring 47 on the secondary shaft 46, and its hub 48 is connected to the body 49 of the transport means.

The cardan shaft is connected to the second clutch half 4 through the reverser 50 and is made of two sections 51 and 52 coaxially mounted one in another and connected to each other by means of the spring 53.

The centrifugal clutch works in the following way.

By rotating of the shaft 1 the first clutch 2 is rotated with the double-arm levers 11. The outer central wheel 22 is also rotated. If a resistant moment is applied to the second clutch half, the carrier 16 will stay at rest. The rotation is transmitted from the outer central wheel 22 on to the satellite 18 therefrom the rotation is transmitted on to the satellite 19 and the latter rotates the cams 9 through the inner central wheel 20. As a diameter of the outer central wheel 22 is longer, than a diameter of the inner central wheel 20 the cams 9 will be rotated faster than the first clutch half 2. As the inner central wheel 20 is connected with the outer central wheel 22 through the two satellites 18 and 19, the cams 9 will be rotated in the same direction with the first clutch half 2.

Thus, by rotating of the first clutch half 2 the cams 9 will be rotate faster, than the double-arm levers 11. Therefore the cams 9 will drive to the double-arm levers and bring them into swinging movement. The cams 9 themselves will be under the impulse effect from the double-arm levers 11.

The impulses will have opposite signs. The negative impulses will take place only at the accelerated movement of the levers 11 from the center to the periphery. The cams 9 will undergo both braking and pushing from the double-arm levers 11.

When the rotation speed of the first clutch half 2 is increased, the double-arm levers 11 can stop the cams 9 rotation in relation to the second clutch half 4 due to their effect, then the rotation speed of the inner central wheel 20 will be equal to the rotation speed of the outer central wheel, in consequence of that the carrier 16 and the second clutch half 4 will be involved into the rotation.

When the cams 9 will receive the pushing impulses from the side of the levers 11, the inner central wheel 20 is forced to rotate faster. The carrier 16 receives the negative impulse.

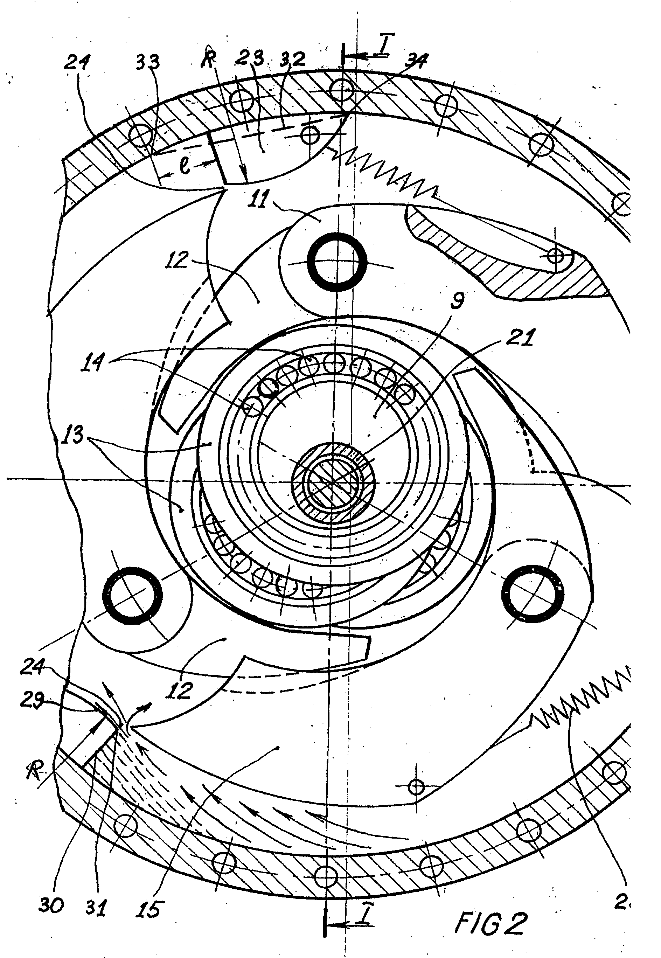

The positive and negative impulses received by the second clutch half 4 are coordinated with the movement of the double-arm levers 11 in the following way. The positive impulse is transmitted to the second clutch half 4 when the loads 15 of the double -arm levers are forced to approach to the axis of rotation of the first clutch half 2. Under such travel the loads 15 of the double-arm levers 11 are replaced by the fluid having a lower speed, than the rotating points of the sealed chamber 3 located on the same place. As according to the laws of inertia the fluid will not be able to acquire immediately the speed corresponding to a larger radius of its rotation, a flow is formed in the direction reverse to the rotation (is shown by the arrows in Fig. 2) in accordance with the effect of Coriolis force. This flow does not make any sufficient effect on the levers 11.

The second clutch half 4 receives the negative force impulse when the loads 15 of the double levers 11 start moving away from the center. Since, the double-arm levers 11 are mounted on the first clutch half 2 so as the direction from the second arm 15 to the first one 12 corresponds to the direction of the rotation of the centrifugal clutch and a fluid flow starts moving under double-arm levers 11 from the side of the first arm 12, this flow meets on its way the plane 30 of the deflector 23. The fluid changes its direction and start moving from the periphery of the sealed chamber 3 to its center, that is to the arms 15 of the double-arm levers 11 (shown by the arrows in Fig. 2). A part of fluid comes out through the gap 24, the other part of it through the channels 25, what provides the stability of the hydraulic damper operation. Thereby, by means of the fluid flow the movement of the arms 15 of the double-arm levers 11 is hold from the center to the periphery, they do not receive the acceleration under such movement, and the negative impulse on the second clutch half 4 is suppressed. Thus, only positive impulses are supplied onto the second clutch half, and the device can work in different conditions of operation, without beats.

Under each brake of the cams 9, the carrier 16 receives an impulse torsional moment, which one it transmits onto the second clutch half 4. The latter in its turn rotates the iron ring 37 of the free-wheeling clutch. The torsional moment is transmitted to the unit of gears 35 through the spring 38. As the reverser 36 undergoes the resistance, the unit of the gears 35 is staying at rest in the first moment. The spring 38 is being twisted at some angle and preserves it due to fixing by the free-wheeling clutch.

As far as the following impulses are being supplied, the spring twisting angle is extending, and, consequently, the torsional moment effecting on the unit of gears 35 is being increased . Finally, the torsional moment on the unit of gears 35 exceeds the moment of resistance, which the reverser is undergoing. The transport means starts moving and receives the acceleration as far as the engine is driving up (speed up). The running gear of the transport means receives sufficiently diminished long impulses in the form of the torsional moment.

As far as the speed of the movement is being increased, the system becomes quasi- rigid and integrated. When it is required to brake abruptly, the mechanism of putting up the free-wheeling clutch starts working. In particular, by pressing the braking pedal, the corresponding sensor reacts and gives a signal onto the executive mechanism of the control drive 43 which rotates the disk 41 and pull out the wedge rollers of the free-wheeling clutch by means of the fingers. Thus, the torsional moment in the spring 38 is not more accumulated what facilitates the braking of the transport means.

The corresponding sensor mounted on the tachometer allows to put on the free-wheeling clutch only when the engine achieves the determined rotations. Therefore, the free-wheeling clutch is not turned on under low (idle) rotations, and the impulses in the spring 38 are not being accumulated. The transport means is temporary at rest.

To prevent the free-wheeling clutch wear, the sensors of speedometer and change-gear lever are used. In particular, when the transport means achieves the determined speed the free-wheeling clutch is not more required and it is off after the sensor of speedometer gives signal.

In order the free-wheeling clutch not to operate in the neutral position of the change-gear lever, the sensor of this lever is used in analogous way.

When required, a driver of the transport can switch on (switch off) the free-wheeling clutch by means the corresponding sensor.

In the second version of execution, when the centrifugal clutch contains a cardan shaft, the work is carried out in analogous way, the corresponding spring 53 located on the sections 51 and 52 of the cardan shaft acts as the energy accumulator, and untwisting of the spring is prevented by the free-wheeling clutch mounted on the secondary shaft 46 of the reverser.

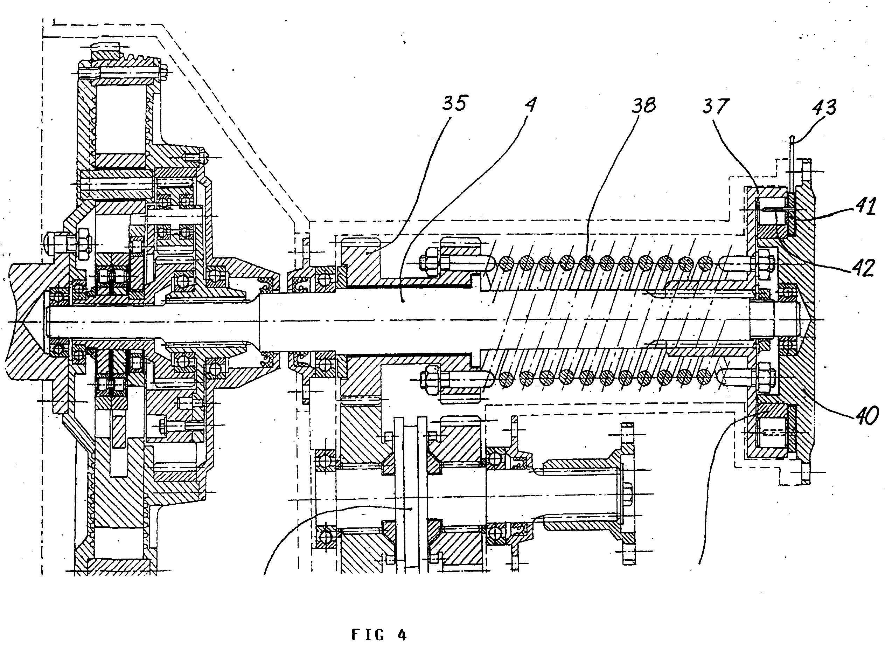

When the transport is in operation, the centrifugal clutch can transform the torsional moment due to the impulse mechanism of its transmission and as it is shown in Fig.4 gives the possibility sufficiently to simplify the transmission box, mounted after this clutch.

### Industrial Application

This invention can be used most effectively in the automotive-tractor industry to transmit the torsional movement from the engine to the running gear.

## Claims

1. A centrifugal clutch containing a first clutch half (2) with a sealed chamber (3) which can be filled with a working fluid, and a second clutch half (4), the two clutch halves being mounted coaxially, the cams (9) mounted on the clutch half with the possibility of rotation, double-arm levers(11) are attached so as to pivot on the first clutch half (2), one of the arms (12) being in contact with the corresponding cam (9),the loads (15) as the other arm of each lever (11), and a hydraulic damping unit provided with deflectors (23) mounted on the periphery of the sealed chamber (3) with a gap (24) in relation to the other arms of each lever (11), a planetary gear whose gear carrier (16) and the satellites (18,19) mounted thereon is rigidly connected to the second clutch half (4), and the inner central wheel (20) of the planetary gear is rigidly connected to the cams (9) characterized in that the sealed chamber (3) contains channels (25) formed from the inside on at least one of the two surfaces (26,27) disposed at opposite sides of levers (11) and mainly on those sections of the surfaces (26,27) which correspond to the region where the loads (15) are arranged and can be displaced, and the loads (15) are connected by a flexible link (28) to the deflectors (23) or to peripheral sections of the chamber (3) which are static in relation to the partitions (23), and the inner central wheel (20) is mounted with the possibility of rotation on the first clutch half (2).

2. The centrifugal clutch according to the claim 1 characterized in that the surface of the deflectors (23) being in contact with the working fluid consists of two sections, the first of which (29) is made in a streamline shape, and the second one (30) is located with a sharp bend in relation to the first one (29) and placed towards to the direction of the working fluid flow.

3. The centrifugal clutch according to the claim 2 characterized in that the first section (29) of the deflectors (23) surfaces is made in the form of a lateral surface of the circular cylinder, and the second section (30) in the form of a vertical section of this cylinder by the plane being perpendicular to a segment (32) connecting the lateral points (33,34) of the deflectors (23) surfaces located at the edge of the sealed chamber (3) and cut off 1/3-1/5 of the said segment (32) from the side of the working fluid flow direction.

4. The centrifugal clutch according to the claim 3 characterized in that the deflectors (23) are made with radius of the curvature of the deflectors (23) cross-section being equal (3-4)E, where E is the cams (9) eccentricity.

5. The centrifugal clutch according to the claim 1 characterized in that a free-wheeling clutch is mounted on the second clutch half (4) being rigidly connected with its iron ring (37) to the second clutch half.

6. The centrifugal clutch according to the claim 5 characterized in that it contains a unit of gears connected to each other, which mounted on the second clutch half can swing and connected to a reverser (36) and an iron ring (37) of the free-wheeling clutch, the link with the iron ring (37) of the free-wheeling clutch is made flexible.

7. The centrifugal clutch according to the claim 6 characterized in that it contains an on-off mechanism connected to at least one of the sensors selected from the group including a tachometer sensor, a brake sensor, a speedometer sensor, a change-gear lever sensor as well as to hand control drive.

8. The centrifugal clutch according to the claim 1 characterized in that it contains a reverser connected to the second clutch half (4) on the secondary shaft (46) of which the free-wheeling clutch is rigidly mounted by its iron ring (47), and a cardan shaft being made of at least two sections (51,52) connected by a flexible link (53) is connected trough the reverser (50) to the second clutch half (4).

9. The centrifugal clutch according to any of the claims 6-8 characterized in that the flexible link (53) contains one or several springs mounted so as to be capable to work for twisting.
